(19) Europäisches Patentamt / European Patent Office / Office européen des brevets

(11) **EP 3 594 310 B1**

(12) **EUROPEAN PATENT SPECIFICATION**

(45) Date of publication and mention
of the grant of the patent:
**22.02.2023 Bulletin 2023/08**

(21) Application number: **18764788.8**

(22) Date of filing: **05.03.2018**

(51) International Patent Classification (IPC):
*C08G 77/02* (2006.01)    *C09D 5/16* (2006.01)
*C09D 183/04* (2006.01)    *C08G 77/24* (2006.01)
*C08G 77/18* (2006.01)    *C08G 77/08* (2006.01)
*C08G 77/04* (2006.01)    *C09J 201/00* (2006.01)
*C09J 7/29* (2018.01)    *C09D 183/02* (2006.01)
*C09D 4/00* (2006.01)

(52) Cooperative Patent Classification (CPC):
**C09J 7/29; C09D 4/00; C09D 5/1675;**
**C09D 183/04; C09J 201/00;** C08G 77/04;
C08G 77/18; C09J 2301/122; C09J 2301/302;
C09J 2483/006

(86) International application number:
**PCT/JP2018/008371**

(87) International publication number:
**WO 2018/164065 (13.09.2018 Gazette 2018/37)**

(54) **LIQUID-REPELLENT COMPOSITION, LIQUID-REPELLENT SHEET, AND METHODS FOR PRODUCING SAME**

FLÜSSIGKEITSABWEISENDE ZUSAMMENSETZUNG, FLÜSSIGKEITSABWEISENDE FOLIE UND VERFAHREN ZU DEREN HERSTELLUNG

COMPOSITION REPOUSSANT LES LIQUIDES, FEUILLE REPOUSSANT LES LIQUIDES, ET PROCÉDÉS DE FABRICATION DE CELLES-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.03.2017 JP 2017046771**

(43) Date of publication of application:
**15.01.2020 Bulletin 2020/03**

(73) Proprietor: **LINTEC Corporation**
**Tokyo 173-0001 (JP)**

(72) Inventors:
• **HIRONAGA, Maki**
**Tokyo 173-0001 (JP)**
• **MIYATA, Sou**
**Tokyo 173-0001 (JP)**

(74) Representative: **Gille Hrabal**
**Partnerschaftsgesellschaft mbB**
**Patentanwälte**
**Brucknerstraße 20**
**40593 Düsseldorf (DE)**

(56) References cited:
WO-A1-2016/114258    WO-A1-2017/010517
JP-A- H09 208 898    JP-A- 2005 146 272
JP-A- 2010 248 000

**Description**

Technical Field

The present invention relates to a liquid-repellent composition, a liquid-repellent sheet, and methods of producing the same.

Background Art

In general, it is desirable that water droplets, scars, stains, and so on that may hinder vision do not adhere to the surfaces of windows for buildings, windows for automobiles, windshields for cars, airplanes, ships, and so on, aquariums, ship bottom windows, undersea lives adhesion preventing films for ship bottoms, road panels, such as soundproof walls, mirrors installed in bathrooms, and so on, and molded articles, such as glass chambers and glass accessories.

By coating the surfaces of such molded articles with a coating film formed of a liquid-repellent substance, or by sticking a liquid-repellent sheet thereto, the surfaces are given liquid repellency, such as water repellency, oil repellency, and liquid slipping properties.

For example, PTL 1 discloses a water-repellent film-coated article, in which a substrate, such as a glass, is coated with a laminate having an underlayer formed of an inorganic compound and a water-repellent film formed of a fluorine-containing compound, which coats the surface of the underlayer.

Moreover, PTL 2 discloses an antifouling composition which comprises a tetrafunctional silane-based compound having a specific structure as component (A), trifunctional silane-based compounds respectively having different specific structures as component (B) and component (C), and a metal catalyst as component (D).

Citation List

Patent Literature

PTL 1: JP 2010-285574 A
PTL 2: WO 2017/010517 A

Summary of Invention

Technical Problem

However, the water-repellent film-coated article described in PTL 1 has a water-repellent film formed of a fluorine-containing compound and is therefore unfavorable from the viewpoint of environmental protection.

In addition, a liquid-repellent layer which the liquid-repellent sheet has is also required that the surface state or curability of the layer is favorable.

An object of the present invention is to provide a liquid-repellent composition having favorable surface state and curability as well as excellent liquid repellency, and a liquid-repellent sheet including a liquid-repellent layer formed of the foregoing liquid-repellent composition.

Solution to Problem

The present inventors have found that a liquid-repellent composition containing a tetrafunctional silane-based compound having a specified structure and a trifunctional silane-based compound having a specified structure in a specified content ratio and further containing a metal catalyst is able to solve the aforementioned problem, thereby leading to accomplishment of the present invention.

Specifically, the present invention provides a liquid-repellent composition as defined in claims 1 to 7, a liquid-repellent sheet as defined in claims 8 to 10, a method of producing the liquid-repellent composition as defined in claim 11, and a method of producing the liquid-repellent sheet as defined in claim 12.

Advantageous Effects of Invention

In accordance with the present invention, it is able to provide a liquid-repellent composition having favorable curability and surface state as well as excellent liquid repellency and a liquid-repellent sheet including a liquid-repellent layer formed of the liquid-repellent composition.

Brief Description of Drawings

Fig. 1 illustrates cross-sectional views of liquid-repellent sheets each having a substrate, as an embodiment of the liquid-repellent sheet obtained by using the liquid-repellent composition solution of the present invention.
Fig. 2 illustrates cross-sectional views of liquid-repellent sheets each not having a substrate, as an embodiment of the liquid-repellent sheet obtained by using the liquid-repellent composition solution of the present invention.

Description of Embodiments

[Liquid-Repellent Composition]

The liquid-repellent composition of the present invention includes a tetrafunctional silane-based compound represented by the general formula (a) as a component (A) and a trifunctional silane-based compound represented by the general formula (b) as a component (B) so as to satisfy a formula (I) as mentioned later, and further includes a metal catalyst as a component (C).
Preferably, the liquid-repellent composition of the present invention further includes an acid catalyst as a component (D) and may include any other additives than the components (A) to (D) within a range where the effects of the present invention are not impaired.
The liquid-repellent layer formed of the liquid-repellent composition of the present invention is favorable in surface state and curability and favorable in liquid repellency, preferably water repellency and liquid slipping properties.
The liquid-repellent composition of the present invention is favorable in reactivity and excellent in productivity.
The liquid-repellent layer is formed in view of the fact that a condensation reaction between the silane-based compounds in the liquid-repellent composition proceeds to form a polymer. The present inventors have paid attention to the matter that with respect to a structure of the polymer obtained through a reaction between the silane-based compounds, by using the component (B) that is the trifunctional silane-based compound having an alkyl group having a relatively larger carbon number, the presence of the alkyl group in the unit derived from the component (B) ($R^2$ in the general formula (b)) contributes to an improvement of liquid repellency.
Meanwhile, the present inventors have conjectured that when the unit derived from the component (B) becomes dense, the reactivity is worsened due to steric hindrance of the bulky alkyl group or the like, whereby there is a tendency that the curability of the liquid-repellent layer is worsened, and the surface hardness is deteriorated.
Similarly, the present inventors have also paid attention to introduction of the unit derived from the component (A) that is the tetrafunctional silane-based compound taking on the responsibility of acting as a spacer between the units derived from the component (B).
But, even in this case, it has been conjectured that when the unit derived from the component (A) increases, the unit derived from the component (B) that may be considered to contribute to an improvement of the water repellency becomes sparse. Furthermore, it has been conjectured that there is a tendency that the hydroxy group existing on the surface of the liquid-repellent layer increases, whereby the water repellency of the liquid-repellent layer is also greatly worsened.
In consequence, even when the component (A) and the component (B) are merely blended, in general, any of the curability, the surface state, and the water repellency is sacrificed, and in particular, it may be considered that the curability and surface state and the water repellency are in a trade-off relationship.
However, the present inventors have found that when the following requirements are satisfied, a liquid-repellent layer capable of making both favorable curability and surface state and excellent water repellency compatible with each other may be formed.
That is, in the content ranges of the component (A) and the component (B) satisfying a specified formula (I) as mentioned later, with respect to the long-chain alkyl group in the unit derived from the component (B) ($R^2$ in the general formula (b)) and the short-chain alkyl group in the unit derived from the component (B) ($R^3$ in the general formula (b)), the specified carbon number has been selected, respectively.
Furthermore, by using the metal catalyst as the component (C), the condensation reaction of the component (A) and the component (B) has been allowed to proceed effectively.
As a result, the present inventors have found that the liquid-repellent layer capable of revealing the aforementioned respective properties may be formed, thereby leading to accomplishment of the present invention.
Each of the components which are included in the water-repellent composition of the present invention is hereunder described.

<Component (A): Tetrafunctional Silane-based Compound Represented by General Formula (a)>

The liquid-repellent composition of the present invention includes a tetrafunctional silane-based compound represented by the following general formula (a) as the component (A):

$$Si(OR^1)_p(X^1)_{4-p} \qquad (a)$$

wherein,
$R^1$ represents an alkyl group having 1 to 6 carbon atoms; $X^1$ represents a halogen atom; when plural $R^1$'s are present, the plural $R^1$'s may be the same as or different from each other; when plural $X^1$'s are present, the plural $X^1$'s may be the same as or different from each other; and p represents an integer of 0 to 4.

Examples of the alkyl group which may be selected as $R^1$ include a methyl group, an ethyl group, a n-propyl group, an isopropyl group, a n-butyl group, a sec-butyl group, an isobutyl group, a tert-butyl group, a n-pentyl group, a n-hexyl group, a neopentyl group, a methylpentyl group, and the like. Among them, from the viewpoint of more improving the reactivity of the component (A), a methyl group, an ethyl group, or a n-propyl group is preferred, and a methyl group or an ethyl group is more preferred.

Although the alkyl group which may be selected as $R^1$ may be either linear or branched, it is preferably linear.

As the halogen atom which may be selected as $X^1$, a chlorine atom, a bromine atom, or an iodine atom is preferred, and a chlorine atom is more preferred.

The silane-based compound represented by the general formula (a) may be used either alone or in combination of two or more thereof.

Preferably, the component (A) includes a silane-based compound represented by the general formula (a) wherein p is 4.

From the viewpoint of obtaining a liquid-repellent layer having more favorable curability and liquid repellency, the content of the component (A) in the liquid-repellent composition is preferably 55.0 mol% or more, more preferably 65.0 mol% or more, still more preferably 75.0 mol% or more, yet still more preferably 85.0 mol% or more, and even yet still more preferably 90.0 mol% or more, and preferably 99.0 mol% or less, more preferably 98.0 mol% or less, and still more preferably 97.5 mol% or less based on 100 mol% of a sum total of the component (A) and the component (B).

The foregoing content can also be calculated from the blending amount at the time of blending each of the components.

<Component (B): Trifunctional Silane-based Compound Represented by General Formula (b)>

The liquid-repellent composition of the present invention includes a trifunctional silane-based compound represented by the following general formula (b) as the component (B) together with the component (A):

$$R^2Si(OR^3)_q(X^2)_{3-q} \qquad (b)$$

wherein,
$R^2$ represents a n-pentadecyl group, a n-hexadecyl group, a n-heptadecyl group, a n-octadecyl group, a n-nonadecyl group, a n-eicosyl group, a n-heneicosyl group, or a n-docosyl group; $R^3$ represents a methyl group; $X^2$ represents a halogen atom; when plural $X^2$'s are present, the plural $X^2$'s may be the same as or different from each other; and q represents an integer of 0 to 3.

In view of the fact that in the general formula (b), $R^3$ is a methyl group, even in the case of containing the component (A) and the component (B) so as to satisfy a formula (I) as mentioned later, the reactivity between the component (A) and the component (B) is maintained, and favorable curability and surface state of the liquid-repellent layer can be maintained.

The alkyl group which may be selected as $R^2$ may have a substituent.

Examples of such a substituent include a halogen atom, such as a chlorine atom, a bromine atom, and an iodine atom; a hydroxy group; a nitro group; an amino group; a cyano group; a thiol group; an epoxy group; a glycidoxy group; a (meth)acryloyloxy group; a cycloalkyl group having 3 to 12 ring-forming carbon atoms (preferably 6 to 10 ring-forming carbon atoms); an aryl group having 6 to 12 ring-forming carbon atoms; a heteroaryl group having 6 to 12 ring-forming atoms, which contains a hetero atom selected from a nitrogen atom, an oxygen atom, and a sulfur atom; an alkoxy group having 1 to 6 carbon atoms (preferably 1 to 3 carbon atoms); an aryloxy group having 6 to 12 ring-forming carbon atoms; and the like. These substituents may be further substituted.

However, the alkyl group which may be selected as $R^2$ is preferably an alkyl group not having a substituent.

As the halogen atom which may be selected as $X^2$, the same halogen atoms which may be selected as $X^1$ in the general formula (a) are exemplified.

The trifunctional silane-based compound represented by the general formula (b) may be used either alone or in combination of two or more thereof.

Preferably, the component (B) includes a trifunctional silane-based compound represented by the general formula (b) wherein q is 3.

The content of the component (B) in the liquid-repellent composition is preferably 1.0 mol% or more, more preferably 2.0 mol% or more, and still more preferably 2.5 mol% or more based on 100 mol% of a sum total of the component (A) and the component (B) from the viewpoint of improving the liquid repellency of the liquid-repellent layer. In addition, from the viewpoint of improving the surface state and curability of the liquid-repellent layer, the foregoing content is preferably 45.0 mol% or less, more preferably 35.0 mol% or less, still more preferably 25.0 mol% or less, yet still more preferably 15.0 mol% or less, and even yet still more preferably 10.0 mol% or less. The foregoing content can also be calculated from the blending amount at the time of blending each of the components.

(Re: Relational Formula (I))

The liquid-repellent composition is a liquid-repellent composition satisfying the following relational formula (I) in the relation between the component (A) and the component (B).

$$\text{Formula (I): } 12 \leq x \leq 64$$

In the formula (I), x represents a ratio of a molar amount of the component (A) to a molar amount of the component (B) [(A)/(B)] (molar ratio).

When x is 12 or more, the curability and the surface hardness of the liquid-repellent layer formed of the liquid-repellent composition are excellent. From such a viewpoint, x is preferably 14 or more, more preferably 18 or more, still more preferably 20 or more, and yet still more preferably 24 or more.

When x is 64 or less, the liquid-repellent layer formed of the liquid-repellent composition has more favorable water repellency due to the presence of the alkyl group represented by $R^2$ in the component (B). From such a viewpoint, x is preferably 54 or less, more preferably 48 or less, still more preferably 40 or less, and yet still more preferably 36 or less.

The foregoing molar ratio can also be calculated from the blending amount at the time of blending each of the components.

(Re: Relational Formula (II))

Preferably, the liquid-repellent composition is a liquid-repellent composition satisfying the following relational formula (II) in the relation between the component (A) and the component (B).

$$\text{Formula (II): } x > (2y + 1)$$

In the formula (II), x represents a ratio of a molar amount of the component (A) to a molar amount of the component (B) [(A)/(B)] (molar ratio); and y represents a carbon number of the alkyl group selected as $R^2$ in the general formula (b) representing the component (B) and represents a number of 12 to 22.

x represents a ratio of a molar amount of the component (A) to a molar amount of the component (B) [(A)/(B)] (molar ratio).

As mentioned above, during a process of forming the liquid-repellent layer from the liquid-repellent composition of the present invention, a condensation reaction between the respective silane-based compounds in the liquid-repellent composition proceeds to form a polymer. The foregoing polymer has a structure in which the unit derived from the component (A) taking on the responsibility of acting as a spacer is incorporated between the units derived from the component (B). Accordingly, as the value of x is large, the blending amount of the component (A) as a spacer increases, and therefore, it may be considered that an average distance between the units derived from the component (B) becomes large.

Namely, the value of x is an index expressing the distance between the units derived from the component (B).

y represents a carbon number of the alkyl group selected as $R^2$ in the general formula (b) representing the component (B) and represents a number of 12 to 22. Incidentally, as mentioned above, in the case where the alkyl group selected as $R^2$ has the aforementioned substituent, the carbon number of the substituent is not included in y.

y is a number of 12 to 22, and as mentioned above, y is preferably a number of 12 to 20, and more preferably a number of 12 to 18.

In the case where the component (B) is constituted of two or more of the trifunctional silane-based compounds represented by the general formula (b), the value of y is a weighted average of the carbon number of the alkyl groups which each of the compounds has.

Here, in general, although the variable "(2y + 1)" expresses the bonding number of the carbon atoms constituting the alkyl group which the component (B) has to the hydrogen atom or substituent, in the present invention, the variable "(2y + 1)" is an index expressing the size of the alkyl group (chain length of the alkyl group).

<Component (C): Metal Catalyst>

The liquid-repellent composition of the present invention further includes a metal catalyst as the component (C) together with the component (A) and the component (B). In the case where the foregoing metal catalyst is not included, the condensation reaction between the component (A) and the component (B) cannot be effectively promoted, and the curability of the liquid-repellent layer formed of the liquid-repellent composition cannot be thoroughly improved.

In the case of the liquid-repellent composition not including the component (C), a curing reaction cannot be allowed to proceed at a relatively low temperature (130°C or lower). Accordingly, for example, in the case where it is desired to form the liquid-repellent layer formed of the liquid-repellent composition on a substrate with low heat resistance, such as a vinyl chloride resin, if it is intended to form the liquid-repellent layer at a low temperature at which heat shrinkage of the substrate may be suppressed, there is a concern that the curability of the liquid-repellent layer becomes insufficient. Conversely, in order to allow the curing reaction to proceed thoroughly, in the case where it is intended to cure the liquid-repellent layer at a relatively high temperature (higher than 130°C), there is a concern that heat shrinkage of the substrate is generated.

Preferably, the metal catalyst is at least one selected from the group consisting of a titanium-based catalyst, a zirconium-based catalyst, a palladium-based catalyst, a tin-based catalyst, an aluminum-based catalyst, and a zinc-based catalyst.

The metal catalyst is a metal catalyst which does not require light irradiation for revealing a catalytic action.

In the present specification, the "metal catalyst which does not require light irradiation for revealing a catalytic action" indicates a metal catalyst which does not require light irradiation for revealing a catalytic action relative to the condensation reaction between the component (A) and the component (B). Metal catalysts generally called photocatalysts, for example, titanium oxide ($TiO_2$) and zinc oxide (ZnO), etc., which require light irradiation for revealing a catalytic action, such as occurrence of oxidation reaction and reduction reaction due to production of an electron and a hole upon light irradiation, are excluded.

In the case where the liquid-repellent layer contains the aforementioned "metal catalyst which does not require light irradiation for revealing a catalytic action", a fault that may be possibly generated in the case of using a photocatalyst can be avoided, and hence, such is preferred. As the fault that may be possibly generated in the case of using a photocatalyst, there are exemplified problems, such as worsening of water repellency to be caused due to the matter that since the photocatalyst itself is a solid, the surface roughness of the liquid-repellent layer becomes large; worsening of water repellency to be caused due to a hydrophilicity giving effect of the photocatalyst; and worsening of durability of the liquid-repellent layer to be caused due to promotion of hydrolysis of a polymer of a silane compound.

Preferably, the titanium-based catalyst is a compound other than a photocatalyst containing a titanium atom, and examples thereof include a titanium alkoxide, a titanium chelate, a titanium acylate, and the like. The titanium-based catalyst may also be a hydroxide, an acetate, a carbonate, a sulfate, a nitrate, a chloride, or the like of titanium.

Examples of the titanium alkoxide include titanium tetraisopropoxide, titanium tetra-n-butoxide, a titanium butoxide dimer, titanium tetra-2-ethylhexoxide, and the like.

Examples of the titanium chelate include a titanium acetylacetonate, such as titanium diisopropoxy bis(acetylacetonate) and titanium tetraacetylacetonate, etc.; a titanium ethylacetoacetate, such as titanium diisopropoxy bis(ethylacetoacetate), etc.; a titanium triethanol aminate, such as titanium diisopropoxy bis(triethanolaminate), etc.; a titanium octylene glyconate, such as titanium tetraoctylene glyconate, titanium dioctyloxy bis(octylene glyconate), and titanium di-2-ethylhexoxy bis(2-ethyl-3-hydroxyhexoxide), etc.; titanium lactate, a titanium lactate ammonium salt, and the like.

Examples of the titanium acylate include polyhydroxytitanium stearate and the like.

Preferably, the zirconium-based catalyst is a compound other than a photocatalyst containing a zirconium atom, and examples thereof include a zirconium alkoxide, a zirconium chelate, a zirconium acylate, and the like. The zirconium-based catalyst may also be a hydroxide, an acetate, a carbonate, a sulfate, a nitrate, a chloride, or the like of zirconium.

Examples of the zirconium alkoxide include zirconium tetra-n-propoxide, zirconium tetra-n-butoxide, and the like.

Examples of the zirconium chelate include a zirconium acetylacetonate, such as zirconium tributoxymonoacetylacetonate and zirconium tetraacetylacetonate, etc.; a zirconium ethylacetonate, such as zirconium dibutoxy bis(ethylacetoacetate), etc.; a zirconium chloride compound, a zirconium lactate ammonium salt, and the like.

Examples of the zirconium acylate include a zirconium octoate compound, zirconium stearate, and the like.

Preferably, the palladium-based catalyst is a compound other than a photocatalyst containing a palladium atom, and examples thereof include palladium, palladium chloride, palladium hydroxide, a palladium-on-carbon catalyst (Pd/C), and the like.

Preferably, the tin-based catalyst is a compound other than a photocatalyst containing a tin atom, and examples thereof include organic tin compounds, such as stannous octoate, dibutyltin diacetate, dibutyltin dilaurate, dibutyltin mercaptide, dibutyltin dithiocarboxylate, dibutyltin dimaleate, dibutyltin mercaptide, and dibutyltin thiocarboxylate, etc., and inorganic tin compounds.

Preferably, the aluminum-based catalyst is a compound other than a photocatalyst containing an aluminum atom, and examples thereof include an acetoacetate complex of aluminum, an acetylacetonate complex of aluminum, and the like.

Examples of the acetoacetate complex of aluminum include diisopropoxyaluminum monooleylacetoacetate, monoisopropoxyaluminum bisoleylacetoacetate, monoisopropoxyaluminum monooleate monoethylacetoacetate, diisopropoxyaluminum monolaurylacetoacetate, diisopropoxyaluminum monostearylacetoacetate, diisopropoxyaluminum monoisostearylacetoacetate, monoisopropoxyaluminum mono-N-lauroyl-β-alanate monolaurylacetoacetate, aluminum trisacetylacetonate, and the like.

Examples of the acetylacetonate complex of aluminum include a monoacetylacetonatoaluminum bis(isobutylacetoacetate) chelate, a monoacetylacetonatoaluminum bis(2-ethylhexylacetoacetate) chelate, a monoacetylacetonatoaluminum bis(dodecylacetoacetate) chelate, a monoacetylacetonatoaluminum bis(oleylacetoacetate) chelate, and the like.

Preferably, the zinc-based catalyst is a compound other than a photocatalyst containing a zinc atom, and examples thereof include a zinc-chromium oxide, a zinc-aluminum oxide, a zinc-aluminum-chromium oxide, a zinc-chromium-manganese oxide, a zinc-iron oxide, a zinc-iron-aluminum oxide, and the like.

The metal catalyst may be used either alone or in combination of two or more thereof.

From the viewpoint of allowing the condensation reaction between the silane-based compounds to proceed effectively and improving the curability of the liquid-repellent layer formed of the liquid-repellent composition as well as the viewpoint of providing an antifouling composition capable of allowing the curing reaction to proceed even at a relatively low temperature (130°C or lower), it is preferred to contain at least the titanium-based catalyst.

The titanium-based catalyst is preferably a titanium chelate; more preferably a titanium ethylacetoacetate, a titanium acetylacetonate, or a titanium octylene glyconate; still more preferably a titanium ethylacetoacetate; and yet still more preferably titanium diisopropoxy bis(ethylacetoacetate).

From the viewpoint of improving the curability of the liquid-repellent layer formed of the liquid-repellent composition as well as the viewpoint of providing a liquid-repellent composition capable of allowing the curing reaction to proceed even at a relatively low temperature (130°C or lower), the content of the component (C) in the liquid-repellent composition is preferably 0.010 mol% or more, more preferably 0.100 mol% or more, still more preferably 0.150 mol% or more, yet still more preferably 0.300 mol% or more, even yet still more preferably 0.500 mol% or more, and even still more preferably 1.000 mol% or more based on 100 mol% of a sum total of the component (A) and the component (B). The foregoing content is preferably 50.000 mol% or less, more preferably 30.000 mol% or less, still more preferably 20.000 mol% or less, yet still more preferably 10.000 mol% or less, even yet still more preferably 6.000 mol% or less, and even still more preferably 3.000 mol% or less.

The foregoing content can also be calculated from the blending amount at the time of blending each of the components.

<Component (D): Acid Catalyst>

From the viewpoint of more improving the curability of the liquid-repellent layer formed of the liquid-repellent composition, it is preferred that the liquid-repellent composition of the present invention further includes an acid catalyst as the component (D).

When the acid catalyst is contained in the liquid-repellent composition, the hydrolysis of the reactive functional groups which the component (A) and the component (B) have is promoted. As a result, the polycondensation reaction between the silane-based compounds is more promoted, thereby enabling one to form the liquid-repellent layer with excellent curability.

The acid catalyst is not particularly limited so long as it is a component having an action to promote the hydrolysis of the reactive functional groups of the component (A) and the component (B). For example, from the viewpoint of more improving the curability of the liquid-repellent layer formed of the liquid-repellent composition, it is preferred to include at least one selected from the group consisting of hydrochloric acid, phosphoric acid, acetic acid, formic acid, sulfuric acid, methanesulfonic acid, oxalic acid, p-toluenesulfonic acid, and trifluoroacetic acid, and it is more preferred to include hydrochloric acid.

The acid catalyst may be used either alone or in combination of two or more thereof.

From the viewpoint of more improving the curability of the liquid-repellent layer formed of the liquid-repellent composition, the content of the component (D) in the liquid-repellent composition is preferably 0.010 mol% or more, more preferably 0.030 mol% or more, still more preferably 0.050 mol% or more, and yet still more preferably 0.060 mol% or more based on 100 mol% of a sum total of the component (A) and the component (B). The foregoing content is preferably 1.000 mol% or less, more preferably 0.500 mol% or less, still more preferably 0.100 mol% or less, and yet still more preferably 0.075 mol% or less.

The foregoing content can also be calculated from the blending amount at the time of blending each of the components.

<Other Additives>

The liquid-repellent composition may further include any other additive than the component (A) to component (D) within a range where the effects of the present invention are not impaired.

Examples of other additives include a trifunctional silane-based compound other than the component (B), a resin component, a curing agent, an antioxidant, a light stabilizer, a flame retardant, an electroconductive agent, an antistatic agent, a plasticizer, and the like.

The content of each of these additives is preferably 0 to 20% by mass, more preferably 0 to 10% by mass, still more preferably 0 to 5% by mass, and yet still more preferably 0 to 2% by mass relative to the total amount of the liquid-repellent composition.

Examples of the trifunctional silane-based compound other than the component (B) include (E) a trifunctional silane-based compound represented by the following general formula (e).

$$R^4Si(OR^5)_r(X^3)_{3-r} \qquad (e)$$

wherein,

R$^4$ represents a methyl group; R$^5$ represents an alkyl group having 1 to 6 carbon atoms; X$^3$ represents a halogen atom; when plural R$^5$'s are present, the plural R$^5$'s may be the same as or different from each other; when plural X$^3$'s are present, the plural X$^3$'s may be the same as or different from each other; and r represents an integer of 0 to 3, Examples of R$^5$ and X$^3$ independently include the same as those mentioned above for R$^1$ and X$^1$ in the general formula (a), respectively, and suitable embodiments are also the same.

Examples of the component (E) include methyltrimethoxysilane, methyltriethoxysilane, methyltripropoxysilane, and the like.

In the case where the composition which is used in the present invention contains the component (E) as the other additive, regardless of the content ranges according to the aforementioned other additives, the content of the component (E) in the composition is preferably 0.50 mol% or more, more preferably 0.80 mol% or more, and still more preferably 1.00 mol% or more, and preferably 30.00 mol% or less, more preferably 20.00 mol% or less, still more preferably 15.00 mol% or less, and yet still more preferably 10.00 mol% or less based on 100 mol% of a sum total of the component (B) and the component (E). The foregoing content can also be calculated from the blending amount at the time of blending each of the components.

The resin component is not particularly limited, and examples of a binder include a cellulose derivative resin, an acrylic resin, a polyester-based resin, a silicone-based resin, a vinyl-based resin, and the like. A condensate or the like of the component (E) is also included in the resin component.

The total content of the component (A), the component (B), and the component (C) in the liquid-repellent composition is preferably 50% by mass or more, more preferably 65% by mass or more, still more preferably 80% by mass or more, yet still more preferably 90% by mass or more, even yet still more preferably 95% by mass or more, and even still more preferably 99% by mass or more, and preferably 100% by mass or less based on 100% by mass of all of an active components in the liquid-repellent composition.

The foregoing content can also be calculated from the blending amount at the time of blending each of the components.

In the present invention, the active components in the liquid-repellent composition indicate liquid components from which a solvent (water or an organic solvent) not participating directly in the reaction is excluded as well as components that are solid at ordinary temperature among the components to be included in the liquid-repellent composition.

In the case of using the component (D), the total content of the component (A), the component (B), the component (C), and the component (D) in the liquid-repellent composition is preferably 50% by mass or more, more preferably 65% by mass or more, still more preferably 80% by mass or more, yet still more preferably 90% by mass or more, even yet still more preferably 95% by mass or more, and even still more preferably 99% by mass or more, and preferably 100%

8

by mass or less based on 100% by mass of all of the active components in the liquid-repellent composition. The foregoing content is more preferably 100% by mass.

The foregoing content can also be calculated from the blending amount at the time of blending each of the components.

<Body to be coated of Liquid-Repellent Composition>

An object material coated with the liquid-repellent composition of the present invention is not particularly limited so long as it is a material requiring liquid repellency. The liquid-repellent composition of the present invention can be suitably used for a glass, a metal, an alloy, a semiconductor, a rubber, a cloth, a plastic, a ceramic, a wood, a paper, a fiber, or the like, and can be more suitably used for a glass or a metal. In addition, the liquid-repellent composition of the present invention can also be suitably used for a metal oxide film or a resin-coated surface.

In the case of coating a body to be coated with the liquid-repellent composition, it is preferred that the liquid-repellent composition is dissolved in an organic solvent and applied in a form of solution by a known coating method.

Examples of the organic solvent include methanol, ethanol, propanol, butanol, isopropyl alcohol, methyl ethyl ketone, methyl isobutyl ketone, cyclohexanone, ethyl acetate, butyl acetate, toluene, mineral spirit, and the like.

The method for coating the body to be coated with the liquid-repellent composition is not particularly limited, and examples thereof include a spin coating method, a spray coating method, a bar coating method, a knife coating method, a roll knife coating method, a roll coating method, a blade coating method, a dip coating method, a curtain coating method, a die coating method, a gravure coating method, and the like.

[Production Method of Liquid-Repellent Composition]

The method of producing a liquid-repellent composition of the present invention includes at least the following step (i):

Step (i): a step of mixing the following components (A) to (C) so as to satisfy the following formula (I):

Component (A): a tetrafunctional silane-based compound represented by the following general formula (a):

$$Si(OR^1)_p(X^1)_{4-p} \qquad (a)$$

wherein,

$R^1$ represents an alkyl group having 1 to 6 carbon atoms; $X^1$ represents a halogen atom; when plural $R^1$'s are present, the plural $R^1$'s may be the same as or different from each other; when plural $X^1$'s are present, the plural $X^1$'s may be the same as or different from each other; and p represents an integer of 0 to 4,

Component (B): a trifunctional silane-based compound represented by the following general formula (b):

$$R^2Si(OR^3)_q(X^2)_{3-q} \qquad (b)$$

wherein,

$R^2$ represents a n-pentadecyl group, a n-hexadecyl group, a n-heptadecyl group, a n-octadecyl group, a n-nonadecyl group, a n-eicosyl group, a n-heneicosyl group, or a n-docosyl group; $R^3$ represents a methyl group; $X^2$ represents a halogen atom; when plural $X^2$'s are present, the plural $X^2$'s may be the same as or different from each other; and q represents an integer of 0 to 3,

Component (C): a metal catalyst, wherein the metal catalyst is a metal catalyst which does not require light irradiation for revealing a catalytic reaction,

$$\text{Formula (I): } 12 \leq x \leq 64$$

wherein,

x represents a ratio of a molar amount of the component (A) to a molar amount of the component (B) [(A)/(B)] (molar ratio).

As for a blending order of the component (A) to the component (C), it is preferred that after blending the component (A) and the component (B), the component (C) is further blended.

As mentioned above, the component (D) may be further blended in the liquid-repellent composition. In the case of blending the component (D), it is preferred that after blending the component (A) and the component (B) and then blending the component (D), the component (C) is further blended. Alternatively, after previously blending the component (D) in each of the component (A) and the component (B) and mixing them, the component (C) may be further blended.

A blending method of blending the component (A), the component (B), and the component (C), and the component (D) to be optionally blended is not particularly limited, and those obtained by diluting each of the components with an organic solvent or the like as mentioned later may be blended.

[Water-Repellent Sheet]

The liquid-repellent composition can be suitably used for a liquid-repellent sheet. The liquid-repellent sheet of the present invention is not particularly limited so long as it is a sheet having a liquid-repellent layer formed of the liquid-repellent composition of the present invention.

<Configuration of Liquid-Repellent Sheet>

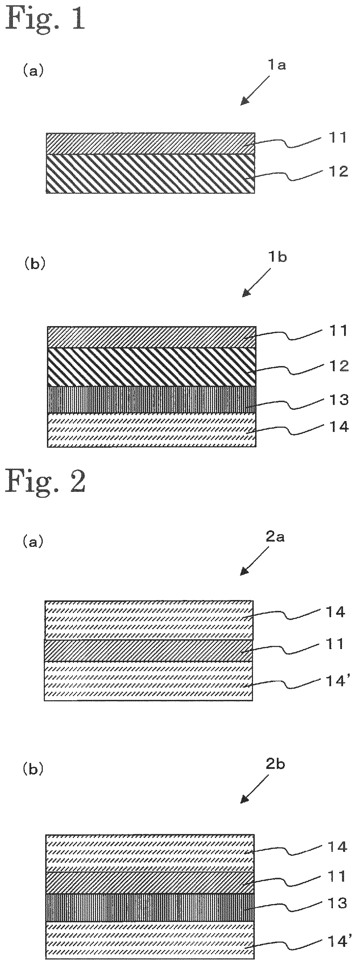

Fig. 1 illustrates cross-sectional views of liquid-repellent sheets each having a substrate, as an embodiment according to the liquid-repellent sheet of the present invention.

As the liquid-repellent sheet having a substrate, there is exemplified a liquid-repellent sheet 1a having a liquid-repellent layer 11 on a substrate 12 as shown in (a) of Fig. 1.

The liquid-repellent sheet may also be a liquid-repellent sheet 1b in which a pressure sensitive adhesive layer 13 and a release material 14 are further provided on the surface opposite to that having the liquid-repellent layer 11 of the substrate 12 as shown in (b) of Fig. 1.

In order to protect the liquid-repellent layer 11 at the time of storage, a release material may be further provided on the liquid-repellent layer 11 of this liquid-repellent sheet 1a or 1b.

Fig. 2 illustrates cross-sectional views of liquid-repellent sheets each not having a substrate, as an embodiment according to the liquid-repellent sheet of the present invention.

As the liquid-repellent sheet not having a substrate, there is exemplified a liquid-repellent sheet 2a having a configuration in which the liquid-repellent layer 11 is sandwiched between two release materials 14 and 14' as shown in (a) of Fig. 2.

The liquid-repellent sheet may also be a liquid-repellent sheet 2b in which in the configuration as shown in (a) of Fig. 2, the pressure sensitive adhesive layer 13 is further provided between the liquid-repellent layer 11 and the release material 14' as shown in (b) of Fig. 2.

<Liquid-Repellent Layer>

The liquid-repellent layer which the liquid-repellent sheet of the present invention has is formed of the liquid-repellent composition of the present invention.

The thickness of the liquid-repellent layer is preferably 0.001 $\mu$m or more, more preferably 0.005 $\mu$m or more, still more preferably 0.01 $\mu$m or more, yet still more preferably 0.05 $\mu$m or more, and even yet still more preferably 0.10 $\mu$m or more. In addition, the foregoing thickness is preferably 40 $\mu$m or less, more preferably 25 $\mu$m or less, still more preferably 15 $\mu$m or less, yet still more preferably 5.0 $\mu$m or less, even yet still more preferably 1.0 $\mu$m or less, and even still more preferably 0.80 $\mu$m or less.

A water contact angle of the liquid-repellent layer is preferably 70° or more, more preferably 80° or more, still more preferably 95° or more, and yet still more preferably 100° or more. In addition, the foregoing water contact angle is preferably 179° or less, more preferably 170° or less, and still more preferably 160° or less.

A water slip angle of the liquid-repellent layer is preferably 25° or less, more preferably 20° or less, and still more preferably 15° or less. In addition, the water slip angle is preferably 0.001° or more, and more preferably 0.002° or more.

Each of the aforementioned thickness, water contact angle, and water slip angle can be measured by the method described in the section of Examples as mentioned later.

<Substrate>

Examples of the substrate which is used for an embodiment of the liquid-repellent sheet of the present invention include a paper substrate, a resin film, a resin sheet, a substrate prepared by laminating a paper substrate with a resin, a glass sheet, a metal foil, a metal sheet, and a porous substrate, and may be suitably selected in accordance with an application of the liquid-repellent sheet.

Examples of the paper that constitutes a paper substrate include thin paper, wood containing paper, wood-free paper, impregnated paper, coated paper, art paper, vegetable parchment, glassine paper, and the like.

Examples of the resin that constitutes a resin film or a resin sheet include polyolefin-based resins, such as polyethylene and polypropylene, etc.; vinyl-based resins, such as polyvinyl chloride, polyvinylidene chloride, polyvinyl alcohol, an ethylene-vinyl acetate copolymer, an ethylene-vinyl alcohol copolymer, and an ethylene-methacrylic acid copolymer, etc.; polyester-based resins, such as polyethylene terephthalate, polybutylene terephthalate, and polyethylene naphthalate, etc.; polystyrene; an acrylonitrile-butadiene-styrene copolymer; cellulose triacetate; a polycarbonate; and urethane-based resins, such as a polyurethane, and an acryl-modified polyurethane, etc.; and the like.

Examples of the substrate prepared by laminating a paper substrate with a resin include laminate papers prepared by laminating the aforementioned paper substrate with a thermoplastic resin, such as polyethylene.

Of these substrates, a resin film or a resin sheet is preferred, a resin film or a resin sheet formed of a polyester-based resin is more preferred, and a resin film or a resin sheet formed of polyethylene terephthalate (PET) is still more preferred.

Though the metal foil or metal sheet is not particularly limited, examples thereof include metal foils or metal sheets formed of various metals, such as aluminum, nickel, stainless steel, copper, titanium, and tungsten.

The porous substrate has to be only a substrate having a large number of pores, and examples thereof include at least one selected from the group consisting of a fiber sheet, a porous film, a porous sheet, a porous fiber, a porous tuber, a granular body, and a foamed body. Of these, at least one selected from the group consisting of a fiber sheet, a porous film, and a porous sheet is preferred, and a fiber sheet is more preferred.

Examples of the fiber sheet include various fiber sheets, such as a woven fabric, a nonwoven fabric, and a knitted fabric. The fiber sheet is preferably a fiber sheet containing at least one selected from the group consisting of an organic fiber and an inorganic fiber, more preferably a fiber sheet containing at least one selected from the group consisting of a synthetic fiber and a glass fiber, and still more preferably a glass fiber sheet containing at least a glass fiber.

Examples of the organic fiber include polyolefin-based resins, such as polyethylene and polypropylene; polyester-based resins, such as polyethylene terephthalate, polybutylene terephthalate, polyethylene naphthalate, and polylactic acid; aliphatic polyamides, such as nylon 6 and nylon 66; wholly aromatic polyamides, such as a para-type or meta-type aramid; polyvinyl alcohol (PVA); the aforementioned synthetic fibers obtained through spinning of the aforementioned resins; and various natural pulps, such as NBKP, LBKP, and abaca pulp.

Examples of the inorganic fiber include glass fibers; ceramic fibers formed of a ceramic raw material, such as alumina, alumina-silica, and zirconia; and metal fibers formed of iron, copper, aluminum, stainless steel, or the like.

In the case where the glass fiber sheet contains a synthetic fiber together with a glass fiber, the synthetic fiber is preferably a PVA fiber.

As the substrate which is used for an embodiment of the liquid-repellent sheet of the present invention, a primer layer-provided substrate in which a primer layer is provided on the surface of the aforementioned substrate may also be used from the viewpoint of improving the adhesiveness thereof to the liquid-repellent layer or a weather-resistant layer as mentioned later.

Examples of the component that constitutes the primer layer include a polyester-based resin, a urethane-based resin, a polyester urethane-based resin, and an acrylic resin. These resins may be used either alone or in combination of two or more thereof.

As the substrate which is used for an embodiment of the liquid-repellent sheet of the present invention, a weather-resistant layer-provided substrate in which a weather-resistant layer formed of a polymeric UV ray absorbent is further provided on the surface of the aforementioned substrate or the surface of the primer layer-provided substrate (a primer layer may be included between the weather-resistant layer and the substrate) may also be used. The polymeric UV ray absorbent is one having a structure in which ultraviolet absorbing skeletons are covalent-bonded within the polymer structure, and its weight average molecular weight is preferably 5,000 or more, and more preferably 10,000 or more.

In the case where the substrate which is used for an embodiment of the liquid-repellent sheet of the present invention is a resin film or a resin sheet, the surface of such a resin film or resin sheet may be subjected to a surface treatment, such as an oxidation method and a roughening method, as the need arises, from the viewpoint of improving the adhesiveness thereof to the liquid-repellent layer.

The oxidation method is not particularly limited, and examples thereof include a corona discharge treatment method, a plasma treatment method, chromic acid oxidation (wet), a flame treatment, a hot blast treatment, and an ozone.UV ray irradiation treatment.

The roughening method is not particularly limited, and examples thereof include a sand blast method and a solvent treatment method.

Though such a surface treatment is suitably selected according to the kind of the substrate, a corona discharge treatment method is preferred from the viewpoint of improving the adhesiveness thereof to the liquid-repellent layer as well as the viewpoint of operability.

A metal vapor deposited film or a metal vapor deposited sheet in which a metal is vapor deposited on the surface of each of the aforementioned substrates may also be used. Though the metal is not particularly limited, and examples thereof include various metals, such as aluminum, nickel, iron, copper, gold, silver, and chromium, and carbides, oxides, or nitrides thereof.

Though the thickness of the substrate is suitably selected according to an application of the liquid-repellent sheet, it is preferably 10 to 250 $\mu$m, more preferably 15 to 200 $\mu$m, and still more preferably 20 to 150 $\mu$m from the viewpoint of handling and economic efficiency.

The substrate which is used in the present invention may further contain a UV ray absorbent other than the aforementioned polymeric UV ray absorbent, a light stabilizer, an antioxidant, an antistatic agent, a slip agent, an antiblocking agent, a colorant, or the like.

<Release Material>

As the release material which is used for an embodiment of the liquid-repellent sheet of the present invention, a release sheet prepared through a double-side release treatment, a release sheet prepared through a single-side release treatment, and the like are usable, and examples thereof include one prepared by coating a substrate for release material with a release agent.

Examples of the substrate for release material include the paper substrate, the resin film, the resin sheet, and the substrate prepared by laminating a paper substrate with a resin, each being usable as the substrate which an embodiment of the liquid-repellent sheet of the present invention has.

Examples of the release agent include a silicone-based resin, an olefin-based resin, an isoprene-based resin, a rubber-based elastomer, such as a butadiene-based resin, a long-chain alkyl-based resin, an alkyd-based resin, and a fluorine-based resin.

Though the thickness of the release material is not particularly limited, it is preferably 10 to 200 $\mu$m, and more preferably 25 to 150 $\mu$m.

In the case of having a configuration in which the liquid-repellent layer is sandwiched between two release materials, the two release materials may be the same as or different from each other.

<Pressure Sensitive Adhesive Layer>

In the case where the liquid-repellent sheet of the present invention includes a pressure sensitive adhesive layer, a pressure sensitive adhesive that constitutes the pressure sensitive adhesive layer can be suitably selected according to an application of the liquid-repellent sheet.

Specifically, examples of the pressure sensitive adhesive include an acrylic pressure sensitive adhesive, a urethane-based pressure sensitive adhesive, a silicone-based pressure sensitive adhesive, a rubber-based pressure sensitive adhesive, a polyester-based pressure sensitive adhesive, and a curing type pressure sensitive adhesive that is cured with energy rays, such as UV rays.

These pressure sensitive adhesives may be used either alone or in combination of two or more thereof.

Though the thickness of the pressure sensitive adhesive layer is not particularly limited, it is preferably 1 to 100 $\mu$m, and more preferably 5 to 80 $\mu$m.

[Production Method of Liquid-Repellent Sheet]

The method of producing a liquid-repellent sheet of the present invention includes the following steps (1) and (2):
Step (1): a step of preparing a liquid-repellent composition including the following components (A) to (C) and satisfying the following formula (I):
Component (A): a tetrafunctional silane-based compound represented by the following general formula (a):

$$Si(OR^1)_p(X^1)_{4-p} \qquad (a)$$

wherein,

$R^1$ represents an alkyl group having 1 to 6 carbon atoms; $X^1$ represents a halogen atom; when plural $R^1$'s are present, the plural $R^1$'s may be the same as or different from each other; when plural $X^1$'s are present, the plural $X^1$'s may be the same as or different from each other; and p represents an integer of 0 to 4,
Component (B): a trifunctional silane-based compound represented by the following general formula (b):

$$R^2Si(OR^3)_q(X^2)_{3-q} \qquad (b)$$

wherein,

$R^2$ represents a n-pentadecyl group, a n-hexadecyl group, a n-heptadecyl group, a n-octadecyl group, a n-nonadecyl group, a n-eicosyl group, a n-heneicosyl group, or a n-docosyl group; $R^3$ represents a methyl group; $X^2$ represents a halogen atom; when plural $X^2$'s are present, the plural $X^2$'s may be the same as or different from each other; and q represents an integer of 0 to 3,

Component (C): a metal catalyst, wherein the metal catalyst is a metal catalyst which does not require light irradiation for revealing a catalytic reaction,

$$\text{Formula (I): } 12 \leq x \leq 64$$

wherein,

x represents a ratio of a molar amount of the component (A) to a molar amount of the component (B) [(A)/(B)] (molar ratio), and

Step (2): a step of coating the liquid-repellent composition on a substrate or a release material, followed by drying to form a liquid-repellent layer.

Preferably, in the case of coating the liquid-repellent composition of the present invention, the liquid-repellent composition of the present invention is dissolved in an organic solvent and coated in a form of solution onto the substrate or release material by a known coating method.

Examples of the organic solvent include methanol, ethanol, propanol, butanol, isopropyl alcohol, methyl ethyl ketone, methyl isobutyl ketone, cyclohexanone, ethyl acetate, butyl acetate, toluene, and mineral spirit.

Examples of the coating method include a spin coating method, a spray coating method, a bar coating method, a knife coating method, a roll knife coating method, a roll coating method, a blade coating method, a dip coating method, a curtain coating method, a die coating method, and a gravure coating method.

As for the coating film, the drying temperature and drying time of the coating film are not particularly limited and can be suitably set.

According to the liquid-repellent composition of the present invention, the curing reaction can be allowed to proceed even at a relatively low temperature as 130°C or lower, and in the case of using a substrate with low heat resistance, such as polyvinyl chloride, heat shrinkage of the substrate can be suppressed.

Accordingly, the drying temperature is preferably 10 to 130°C, more preferably 20 to 120°C, still more preferably 40 to 110°C, and yet still more preferably 50 to 95°C from the aforementioned viewpoints as well as the viewpoint of productivity.

In order to protect the surface of the liquid-repellent layer at the time of storage, a release material may be further laminated on the formed liquid-repellent layer.

Furthermore, by sticking a pressure sensitive adhesive layer formed on another release material onto the substrate or the formed liquid-repellent layer, a pressure sensitive adhesive layer-provided liquid-repellent sheet can also be produced as in the liquid-repellent sheet 1b of (b) of Fig. 1 or the liquid-repellent sheet 2b of (b) of Fig. 2.

Examples

Examples 1 to 6 and Comparative Examples 1 and 2.

Example 1 is not according to the invention.

(1) Preparation of Liquid-Repellent Composition

The component (A) and the component (B) of the kind and blending ratio (active component ratio, mol%) shown in Table 1 were blended, and ethanol was added to dilute the blend, thereby obtaining a solution having an active component concentration of 1.3 M. The resulting solution was further blended with hydrochloric acid that is the component (D) in a blending ratio (active component ratio, mol%) shown in Table 1 and stirred for one minute. After stirring, the resultant was allowed to stand for 15 minutes.

Subsequently, titanium diisopropoxy bis(ethylacetoacetate) that is the component (C) in a blending ratio (active component ratio, mol%) shown in Table 1 was blended to prepare a solution of a liquid-repellent composition. (2) Production of Liquid-Repellent Sheet

A polyethylene terephthalate (PET) film having a primer layer provided on one surface thereof (trade name "COSMOSHINE A-4100" having a thickness of 50 μm, manufactured by Toyobo Co., Ltd.) was used as a substrate. On the primer layer of the foregoing primer layer-provided substrate, the above-prepared solution of liquid-repellent composition was applied using a Mayer bar, thereby forming a coating film.

Subsequently, the coating film was dried at 80°C for 2 minutes, thereby producing a water-repellent sheet having a liquid-repellent layer having a thickness shown in Table 1.

Details of the respective components shown in Table 1, which were used in preparing the liquid-repellent composition in each of the Examples and Comparative Examples, are as follows.

<Component (A): Tetrafunctional Silane-based Compound>

- "TEOS": Tetraethoxysilane that is the tetrafunctional silane-based compound represented by the general formula (a) wherein p is 4, and $R^1$ is an ethyl group (carbon number: 2)

<Component (B): Trifunctional Silane-based Compound>

· "Dodecyltrimethoxysilane": Trifunctional silane-based compound represented by the general formula (b) wherein q is 3, $R^2$ is a n-dodecyl group (carbon number: 12), and $R^3$ is a methyl group (carbon number: 1)
· "Hexadecyltrimethoxysilane": Trifunctional silane-based compound represented by the general formula (b) wherein q is 3, $R^2$ is a n-hexadecyl group (carbon number: 16), and $R^3$ is a methyl group (carbon number: 1)
· "Octadecyltrimethoxysilane": Trifunctional silane-based compound represented by the general formula (b) wherein q is 3, $R^2$ is a n-octadecyl group (carbon number: 18), and $R^3$ is a methyl group (carbon number: 1)

<Trifunctional Silane-based Compound Other Than Component (B)>

- "Dodecyltriethoxysilane": Trifunctional silane-based compound represented by the general formula (b) wherein q is 3, $R^2$ is a n-dodecyl group (carbon number: 12), and $R^3$ is an ethyl group (carbon number: 2)

<Component (C): Metal-based Catalyst>

- "Titanium-based catalyst": Titanium diisopropoxy bis(ethylacetoacetate) [trade name "ORGATIX TC-750", manufactured by Matsumoto Fine Chemical Co., Ltd.]

<Component (D): Acid Catalyst>

- "Hydrochloric acid": 0.01M hydrochloric acid

Properties of the liquid-repellent composition prepared in each of the Examples and Comparative Examples and the liquid-repellent layer formed of the foregoing liquid-repellent composition were evaluated according to the following methods. The results are shown in Table 1.

<Reactivity of Liquid-Repellent Composition>

With respect to the liquid-repellent composition prepared in each of the Examples and Comparative Examples, the reactivity was evaluated according to the following criteria. As for the judgement of completion of curing, the surface of the liquid-repellent layer of the liquid-repellent sheet produced in each of the Examples and Comparative Examples was rubbed 20 times with a finger, and the resulting liquid-repellent layer was visually observed. The case where the resulting liquid-repellent layer did not change as compared with that before rubbing with a finger was judged as "cured".

A: The liquid-repellent layer was cured immediately after the water-repellent sheet was produced (dried at 80°C for 2 minutes).

B: The liquid-repellent layer was not cured immediately after the water-repellent sheet was produced (dried at 80°C for 2 minutes); after the production, the water-repellent sheet was stored under a condition at 23°C and 50% RH; and after storing for one hour, the liquid-repellent layer was cured.

C: After the liquid-repellent sheet was produced (dried at 80°C for 2 minutes), the water-repellent sheet was stored under a condition at 23°C and 50% RH, and after storing for 24 hours, the liquid-repellent layer was cured.

D: After drying (drying at 80°C for 2 minutes) for producing the water-repellent sheet, the water-repellent sheet was stored under a condition at 23°C and 50% RH; but, even after storing for 24 hours, the liquid-repellent layer was not cured.

<Thickness of Liquid-Repellent Layer>

The thickness of the liquid-repellent layer was measured with a spectroscopic ellipsometer (trade name: "M-2000", manufactured by J. A. Woollam Co., Inc.).

<Surface State of Liquid-Repellent Layer>

Immediately after producing the liquid-repellent sheet produced in each of the Examples and Comparative Examples, the surface of the liquid-repellent layer of the liquid-repellent sheet was visually observed, and the surface state of the liquid-repellent layer was evaluated according to the following criteria.

A: The surface of the liquid-repellent layer was transparent.

B: The surface of the liquid-repellent layer was confirmed to be slightly cloudy.

C: The surface of the liquid-repellent layer was cloudy and not transparent.

<Curability of Liquid-Repellent Layer>

The surface of the liquid-repellent layer of the liquid-repellent sheet produced in each of the Examples and Comparative Examples was rubbed 20 times with a finger and then visually observed, and the curability of the liquid-repellent layer was evaluated according to the following criteria.

A: There was seen no change in the color as compared with that before rubbing the liquid-repellent layer with a finger.

B: The color was slightly changed white, but the change was on an acceptable level.

C: The color was changed white.

D: The coating film formed of the liquid-repellent composition was not cured, so that a liquid-repellent layer could not be formed.

The liquid-repellent sheets given the evaluation of "C" or "D" regarding the curability of the liquid-repellent layer were not on a usable level, and therefore, they were not evaluated in the following respective properties.

<Water Contact Angle of Liquid-Repellent Layer>

With respect to the surface of the liquid-repellent layer of the liquid-repellent sheet produced in each of the Examples and Comparative Examples, the water contact angle of the liquid-repellent layer was measured with an automatic contact angle meter, manufactured by Kyowa Interface Science Co., Ltd. (trade name: "DM-701") in terms of a contact angle against 2 μL of water.

<Water Slip Angle of Liquid-Repellent Layer>

The liquid-repellent sheet produced in each of the Examples and Comparative Examples was, while stretched in wet, put on a sample table (glass plate) at a tilt angle of 0°. Subsequently, 14 μL of pure water was dropped on the surface of the liquid-repellent layer of the aforementioned liquid-repellent sheet to form a droplet. Thereafter, on the occasion of inclining the sample table, the tilt angle when a receding angle of the droplet moved was defined as the water slip angle.

Table 1

| | | Composition of liquid-repellent composition | | | | | | | Evaluation items | | | | | |
|---|---|---|---|---|---|---|---|---|---|---|---|---|---|---|
| | | Component (A) | | Component (B) | | | [(A)/(B)] [molar ratio] | Component (C) | Component (D) | Reactivity of liquid-repel-lent composi-tion | Properties of liquid-repellent layer | | | | |
| | | Kind | Blending ratio [mol%] ∗1 | Kind | Carbon number of R$^2$ in formula (b) | Blending ratio [mol%] ∗1 | | Blending ra-tio [mol%] ∗1 | Blending ra-tio [mol%] ∗1 | | Thickness [μm] | Surface state | Curability | Water contact angle [°] | Water slip angle [°] |
| Example 1 | | TEOS | 94.1 | Dodecyltri-methoxysi-lane | 12 | 5.9 | 16.0 | 2.000 | 0.067 | A | 0.484 | A | A | 109.9 | 6.8 |
| Example 2 | | TEOS | 94.1 | Hexadecylt-rimethox-ysilane | 16 | 5.9 | 16.0 | 2.000 | 0.067 | A | 0.491 | A | A | 108.5 | 7.4 |
| Example 3 | | TEOS | 94.1 | Octadecylt-rimethox-ysilane | 18 | 5.9 | 16.0 | 2.000 | 0.067 | A | 0.495 | A | A | 108.1 | 9.0 |
| Example 4 | | TEOS | 97.0 | Dodecyltri-methoxysi-lane | 12 | 3.0 | 32.0 | 2.000 | 0.067 | A | 0.440 | A | A | 109.3 | 8.0 |
| Example 5 | | TEOS | 97.0 | Hexadecylt-rimethox-ysilane | 16 | 3.0 | 32.0 | 2.000 | 0.067 | A | 0.445 | A | A | 109.2 | 9.5 |
| Example 6 | | TEOS | 97.0 | Octadecylt-rimethox-ysilane | 18 | 3.0 | 32.0 | 2.000 | 0.067 | A | 0.452 | A | A | 109.0 | 10.2 |
| Comparative Example 1 | | TEOS | 97.0 | Dodecyltri-ethoxysi-lane ∗2 | 12 | 3.0 | 32.0 | 2.000 | 0.067 | B | n.d. ∗3 | B | C | n.d. ∗3 | n.d. ∗3 |

16

| | Composition of liquid-repellent composition | | | | | | | | Evaluation items | | | | | |
| | Component (A) | | Component (B) | | | | Component (C) | Component (D) | Reactivity of liquid-repel-lent composi-tion | Properties of liquid-repellent layer | | | | |
| | Kind | Blending ratio [mol%] *1 | Kind | Carbon number of $R^2$ in formula (b) | Blending ratio [mol%] *1 | [(A)/(B)] [molar ratio] | Blending ra-tio [mol%] *1 | Blending ra-tio [mol%] *1 | | Thickness [μm] | Surface state | Curability | Water contact angle [°] | Water slip an-gle [°] |
| Comparative Example 2 | TEOS | 97.0 | DodecylTri-methoxysi-lane | 12 | 3.0 | 32.0 | 0 | 0.067 | C | n.d. *3 | A | D | n.d. *3 | n.d. *3 |

*1: Blending ratio based on 100 mol% of a sum total of the component (A) and the component (B)
*2: Trifunctional silane-based compound other than the component (B)
*3: Not evaluated because the surface state of the liquid-repellent layer was graded as "C", or the curability of the liquid-repellent layer was graded as "C" or "D"

From Table 1, the reactivity of the liquid-repellent composition of each of Examples 1 to 6 was confirmed to be excellent. When the foregoing reactivity is favorable, for example, on the occasion of mass-producing a liquid-repellent sheet, in the case of winding up the liquid-repellent sheet in a roll form or other case, a fault of transfer of the liquid-repellent layer in an uncured state onto the rear surface of the release material of the liquid-repellent sheet, and a fault of worsening of smoothness of the liquid-repellent layer or worsening of blocking resistance can be suppressed.

In addition, the liquid-repellent layer formed of the liquid-repellent composition of each of Examples 1 to 6 was favorable in surface state and curability. Then, it was confirmed that the liquid-repellent layer formed of the liquid-repellent composition of each of Examples 1 to 6 is large in the water contact angle, small in the water slip angle, and excellent in water repellency and water slipping properties.

On the other hand, the reactivity of the liquid-repellent composition of each of Comparative Examples 1 and 2 was confirmed to be inferior.

In addition, the liquid-repellent layer formed of the liquid-repellent composition of Comparative Example 1 resulted in inferior surface state and curability in view of the matter that the alkyl group represented by $R^3$ in the general formula (b) representing the component (B) is not a methyl group.

In addition, the liquid-repellent layer formed of the liquid-repellent composition of Comparative Example 2 resulted in inferior surface state and curability in view of the matter that the component (C) is not used.

Accordingly, based on the judgement that the liquid-repellent sheet including the liquid-repellent layer of each of Comparative Examples 1 and 2 was not on a usable level, the evaluations other than those regarding the surface state and curability were not performed.

Industrial Applicability

The liquid-repellent composition of the present invention is favorable in reactivity, and the liquid-repellent layer formed of the foregoing liquid-repellent composition is favorable in surface state and curability and also favorable in water repellency and water slipping properties.

Accordingly, the liquid-repellent sheet including the liquid-repellent layer of the present invention is suitable, for example, as a liquid-repellent sheet for preventing water droplets, scars, stains, and the like that may hinder vision, from adhering to the surfaces of windows for buildings, windows for automobiles, windshields for cars, airplanes, ships, and the like, aquariums, ship bottom windows, undersea lives adhesion preventing films for ship bottoms, road panels, such as soundproof walls, mirrors installed in bathrooms or the like, and molded articles, such as glass containers and glass accessories.

Reference Signs List

1a, 1b, 2a, 2b: Liquid-repellent sheet
11: Liquid-repellent layer
12: Substrate
13: Pressure sensitive adhesive layer
14, 14': Release material

**Claims**

**1.** A liquid-repellent composition comprising the following components (A) to (C) and satisfying the following formula (I):
Component (A): a tetrafunctional silane-based compound represented by the following general formula (a):

$$Si(OR^1)_p(X^1)_{4-p} \qquad (a)$$

wherein,

$R^1$ represents an alkyl group having 1 to 6 carbon atoms; $X^1$ represents a halogen atom; when plural $R^1$'s are present, the plural $R^1$'s may be the same as or different from each other; when plural $X^1$'s are present, the plural $X^1$'s may be the same as or different from each other; and p represents an integer of 0 to 4,
Component (B): a trifunctional silane-based compound represented by the following general formula (b):

$$R^2Si(OR^3)_q(X^2)_{3-q} \qquad (b)$$

18

wherein,

R$^2$ represents a n-pentadecyl group, a n-hexadecyl group, a n-heptadecyl group, a n-octadecyl group, a n-nonadecyl group, a n-eicosyl group, a n-heneicosyl group, or a n-docosyl group; R$^3$ represents a methyl group; X$^2$ represents a halogen atom; when plural X$^2$'s are present, the plural X$^2$'s may be the same as or different from each other; and q represents an integer of 0 to 3,

Component (C): a metal catalyst,

$$\text{Formula (I): } 12 \leq x \leq 64$$

wherein,

x represents a ratio of a molar amount of the component (A) to a molar amount of the component (B) [(A)/(B)] (molar ratio), and wherein the metal catalyst (Component (C)) is a metal catalyst which does not require light irradiation for revealing a catalytic action.

2. The liquid-repellent composition according to claim 1, wherein the component (C) is at least one selected from the group consisting of a titanium-based catalyst, a zirconium-based catalyst, a palladium-based catalyst, a tin-based catalyst, an aluminum-based catalyst, and a zinc-based catalyst.

3. The liquid-repellent composition according to claim 1 or 2, wherein the content of the component (C) is 0.010 mol% or more and 50.000 mol% or less based on 100 mol% of a sum total of the component (A) and the component (B).

4. The liquid-repellent composition according to any one of claims 1 to 3, further comprising an acid catalyst that is a component (D), the content of the component (D) being 0.010 mol% or more and 1.000 mol% or less based on 100 mol% of a sum total of the component (A) and the component (B).

5. The liquid-repellent composition according to claim 4, wherein the component (D) is at least one selected from the group consisting of hydrochloric acid, phosphoric acid, acetic acid, formic acid, sulfuric acid, methanesulfonic acid, oxalic acid, p-toluenesulfonic acid, and trifluoroacetic acid.

6. The liquid-repellent composition according to any one of claims 1 to 5, wherein a total content of the component (A), the component (B), and the component (C) in the liquid-repellent composition is 50% by mass or more and 100% by mass or less based on 100% by mass of the total amount of the liquid-repellent composition.

7. The liquid-repellent composition according to any one of claims 1 to 6, further satisfying the following relational formula (II):

$$\text{Formula (II): } x > (2y + 1)$$

wherein,

x represents a ratio of a molar amount of the component (A) to a molar amount of the component (B) [(A)/(B)] (molar ratio); and y represents a carbon number of the alkyl group selected as R$^2$ in the general formula (b) representing the component (B).

8. A liquid-repellent sheet comprising a liquid-repellent layer and a substrate or a release material, wherein the liquid-repellent layer is formed by coating the liquid-repellent composition according to any one of claims 1 to 7 onto the substrate or release material followed by drying to form the liquid-repellent layer.

9. The liquid-repellent sheet according to claim 8, having a configuration in which the liquid-repellent layer is sandwiched between two release materials.

10. The liquid-repellent sheet according to claim 8 or 9, further comprising a pressure sensitive adhesive layer.

11. A method of producing the liquid-repellent composition according to any one of claims 1 to 7, comprising at least the following step (i):
Step (i): a step of mixing the following components (A) to (C) so as to satisfy the following formula (I):

Component (A): a tetrafunctional silane-based compound represented by the following general formula (a):

$$Si(OR^1)_p(X^1)_{4-p} \qquad (a)$$

wherein,
$R^1$ represents an alkyl group having 1 to 6 carbon atoms; $X^1$ represents a halogen atom; when plural $R^1$'s are present, the plural $R^1$'s may be the same as or different from each other; when plural $X^1$'s are present, the plural $X^1$'s may be the same as or different from each other; and p represents an integer of 0 to 4,
Component (B): a trifunctional silane-based compound represented by the following general formula (b):

$$R^2Si(OR^3)_q(X^2)_{3-q} \qquad (b)$$

wherein,
$R^2$ represents a n-pentadecyl group, a n-hexadecyl group, a n-heptadecyl group, a n-octadecyl group, a n-nonadecyl group, a n-eicosyl group, a n-heneicosyl group, or a n-docosyl group; $R^3$ represents a methyl group; $X^2$ represents a halogen atom; when plural $X^2$'s are present, the plural $X^2$'s may be the same as or different from each other; and q represents an integer of 0 to 3,
Component (C): a metal catalyst,

$$\text{Formula (I): } 12 \le x \le 64$$

wherein,
x represents a ratio of a molar amount of the component (A) to a molar amount of the component (B) [(A)/(B)] (molar ratio), and wherein the metal catalyst (Component (C)) is a metal catalyst which does not require light irradiation for revealing a catalytic action.

12. A method of producing the liquid-repellent sheet according to any of claims 8 to 10, comprising the following steps (1) and (2):

Step (1): a step of preparing a liquid-repellent composition including the following components (A) to (C) and satisfying the following formula (I):

Component (A): a tetrafunctional silane-based compound represented by the following general formula (a):

$$Si(OR^1)_p(X^1)_{4-p} \qquad (a)$$

wherein,
$R^1$ represents an alkyl group having 1 to 6 carbon atoms; $X^1$ represents a halogen atom; when plural $R^1$'s are present, the plural $R^1$'s may be the same as or different from each other; when plural $X^1$'s are present, the plural $X^1$'s may be the same as or different from each other; and p represents an integer of 0 to 4,
Component (B): a trifunctional silane-based compound represented by the following general formula (b):

$$R^2Si(OR^3)_q(X^2)_{3-q} \qquad (b)$$

wherein,
$R^2$ represents a n-pentadecyl group, a n-hexadecyl group, a n-heptadecyl group, a n-octadecyl group, a n-nonadecyl group, a n-eicosyl group, a n-heneicosyl group, or a n-docosyl group; $R^3$ represents a methyl group; $X^2$ represents a halogen atom; when plural $X^2$'s are present, the plural $X^2$'s may be the same as or different from each other; and q represents an integer of 0 to 3,
Component (C): a metal catalyst,

$$\text{Formula (I): } 12 \le x \le 64$$

wherein,
x represents a ratio of a molar amount of the component (A) to a molar amount of the component (B) [(A)/(B)] (molar ratio), wherein the metal catalyst (Component (C)) is a metal catalyst which does not require light irradiation for revealing a catalytic action, and

Step (2): a step of coating the liquid-repellent composition on a substrate or a release material, followed by drying to form a liquid-repellent layer.

**Patentansprüche**

1.  Flüssigkeitsabweisende Zusammensetzung, die die folgenden Komponenten (A) bis (C) umfasst und die folgende Formel (I) erfüllt:
    Komponente (A): eine tetrafunktionelle Verbindung auf Silanbasis, dargestellt durch die folgende allgemeine Formel (a):

    $$Si(OR^1)_p(X^1)_{4-p} \qquad (a)$$

    wobei,

    $R^1$ eine Alkylgruppe mit 1 bis 6 Kohlenstoffatomen darstellt; $X^1$ ein Halogenatom darstellt; wenn mehrere $R^1$ vorhanden sind, können die mehreren $R^1$ gleich oder verschieden voneinander sein; wenn mehrere $X^1$ vorhanden sind, können die mehreren $X^1$ gleich oder verschieden voneinander sein; und p eine ganze Zahl von 0 bis 4 darstellt,
    Komponente (B): eine trifunktionelle Verbindung auf Silanbasis, dargestellt durch die folgende allgemeine Formel (b):

    $$R^2S1(OR^3)_q(X^2)_{3-q} \qquad (b)$$

    wobei,
    $R^2$ eine n-Pentadecylgruppe, eine n-Hexadecylgruppe, eine n-Heptadecylgruppe, eine n-Octadecylgruppe, eine n-Nonadecylgruppe, eine n-Eicosylgruppe, eine n-Heneicosylgruppe oder eine n-Docosylgruppe darstellt; $R^3$ eine Methylgruppe darstellt; $X^2$ ein Halogenatom darstellt; wenn mehrere $X^2$ vorhanden sind, die mehreren $X^2$ gleich oder verschieden voneinander sein können; und q eine ganze Zahl von 0 bis 3 darstellt,
    Komponente (C): ein Metallkatalysator,

$$\text{Formel (I): } 12 \le x \le 64$$

    wobei,
    x ein Verhältnis einer molaren Menge der Komponente (A) zu einer molaren Menge der Komponente (B) [(A)/(B)] (molares Verhältnis) darstellt, und wobei der Metallkatalysator (Komponente (C)) ein Metallkatalysator ist, der keine Lichtbestrahlung benötigt, um eine katalytische Wirkung zu entfalten.

2.  Flüssigkeitsabweisende Zusammensetzung nach Anspruch 1, wobei die Komponente (C) mindestens eine ist, die ausgewählt ist aus der Gruppe bestehend aus einem Katalysator auf Titanbasis, einem Katalysator auf Zirkoniumbasis, einem Katalysator auf Palladiumbasis, einem Katalysator auf Zinnbasis, einem Katalysator auf Aluminiumbasis und einem Katalysator auf Zinkbasis.

3.  Flüssigkeitsabweisende Zusammensetzung nach Anspruch 1 oder 2, wobei der Gehalt der Komponente (C) 0,010 Mol-% oder mehr und 50.000 Mol-% oder weniger beträgt, bezogen auf 100 Mol-% der Gesamtsumme aus der Komponente (A) und der Komponente (B).

4.  Flüssigkeitsabweisende Zusammensetzung nach einem der Ansprüche 1 bis 3, ferner umfassend einen Säurekatalysator, der eine Komponente (D) ist, wobei der Gehalt der Komponente (D) 0,010 Mol-% oder mehr und 1,000 Mol-% oder weniger, bezogen auf 100 Mol-% der Gesamtsumme der Komponente (A) und der Komponente (B), beträgt.

5.  Flüssigkeitsabweisende Zusammensetzung nach Anspruch 4, wobei die Komponente (D) mindestens eine ist, die ausgewählt ist aus der Gruppe bestehend aus Salzsäure, Phosphorsäure, Essigsäure, Ameisensäure, Schwefelsäure, Methansulfonsäure, Oxalsäure, p-Toluolsulfonsäure und Trifluoressigsäure.

6.  Flüssigkeitsabweisende Zusammensetzung nach einem der Ansprüche 1 bis 5, wobei der Gesamtgehalt der Komponente (A), der Komponente (B) und der Komponente (C) in der flüssigkeitsabweisenden Zusammensetzung 50 Massenprozent oder mehr und 100 Massenprozent oder weniger beträgt, bezogen auf 100 Massenprozent der Gesamtmenge der flüssigkeitsabweisenden Zusammensetzung.

7. Flüssigkeitsabweisende Zusammensetzung nach einem der Ansprüche 1 bis 6, die außerdem die folgende Verhältnisformel (II) erfüllt:

$$\text{Formel (II): } x > (2y + 1)$$

wobei,
x ein Verhältnis einer molaren Menge der Komponente (A) zu einer molaren Menge der Komponente (B) [(A)/(B)] (Molverhältnis) darstellt; und y eine Kohlenstoffanzahl der als $R^2$ in der allgemeinen Formel (b) ausgewählten Alkylgruppe darstellt, die die Komponente (B) repräsentiert.

8. Flüssigkeitsabweisende Folie, umfassend eine flüssigkeitsabweisende Schicht und ein Substrat oder ein Trennmaterial, wobei die flüssigkeitsabweisende Schicht durch Auftragen der flüssigkeitsabweisenden Zusammensetzung nach einem der Ansprüche 1 bis 7 auf das Substrat oder Trennmaterial und anschließendes Trocknen zur Bildung der flüssigkeitsabweisenden Schicht gebildet wird.

9. Flüssigkeitsabweisende Folie nach Anspruch 8 mit einer Konfiguration, bei der die flüssigkeitsabweisende Schicht zwischen zwei Trennmaterialien angeordnet ist.

10. Die flüssigkeitsabweisende Folie nach Anspruch 8 oder 9, außerdem umfassend eine druckempfindliche Klebstoffschicht.

11. Verfahren zur Herstellung der flüssigkeitsabweisenden Zusammensetzung nach einem der Ansprüche 1 bis 7, umfassend mindestens den folgenden Schritt (i):
Schritt (i): ein Schritt des Mischens der folgenden Komponenten (A) bis (C), um die folgende Formel (I) zu erfüllen:

Komponente (A): eine tetrafunktionelle Verbindung auf Silanbasis, dargestellt durch die folgende allgemeine Formel (a):

$$Si(OR^1)_p(X^1)_{4-p} \qquad (a)$$

wobei,
$R^1$ eine Alkylgruppe mit 1 bis 6 Kohlenstoffatomen darstellt; $X^1$ ein Halogenatom darstellt; wenn mehrere $R^1$ vorhanden sind, können die mehreren $R^1$ gleich oder verschieden voneinander sein; wenn mehrere $X^1$ vorhanden sind, können die mehreren $X^1$ gleich oder verschieden voneinander sein; und p eine ganze Zahl von 0 bis 4 darstellt,
Komponente (B): eine trifunktionelle Verbindung auf Silanbasis, dargestellt durch die folgende allgemeine Formel (b):

$$R^2S1(OR^3)_q(X^2)_{3-q} \qquad (b)$$

wobei,
$R^2$ eine n-Pentadecylgruppe, eine n-Hexadecylgruppe, eine n-Heptadecylgruppe, eine n-Octadecylgruppe, eine n-Nonadecylgruppe, eine n-Eicosylgruppe, eine n-Heneicosylgruppe oder eine n-Docosylgruppe darstellt; $R^3$ eine Methylgruppe darstellt; $X^2$ ein Halogenatom darstellt; wenn mehrere $X^2$ vorhanden sind, die mehreren $X^2$ gleich oder verschieden voneinander sein können; und q eine ganze Zahl von 0 bis 3 darstellt
Komponente (C): ein Metallkatalysator,

$$\text{Formel (I): } 12 \leq x \leq 64$$

wobei,
x ein Verhältnis einer molaren Menge der Komponente (A) zu einer molaren Menge der Komponente (B) [(A)/(B)] (molares Verhältnis) darstellt, und wobei der Metallkatalysator (Komponente (C)) ein Metallkatalysator ist, der keine Lichtbestrahlung benötigt, um eine katalytische Wirkung zu entfalten.

12. Verfahren zur Herstellung der flüssigkeitsabweisenden Folie nach einem der Ansprüche 8 bis 10, umfassend die folgenden Schritte (1) und (2):

Schritt (1): ein Schritt der Herstellung einer flüssigkeitsabweisenden Zusammensetzung, die die folgenden Komponenten (A) bis (C) enthält und die folgende Formel (I) erfüllt:

Komponente (A): eine tetrafunktionelle Verbindung auf Silanbasis, dargestellt durch die folgende allgemeine Formel (a):

$$Si(OR^1)_p(X^1)_{4-p} \qquad (a)$$

wobei,

$R^1$ eine Alkylgruppe mit 1 bis 6 Kohlenstoffatomen darstellt; $X^1$ ein Halogenatom darstellt; wenn mehrere $R^1$ vorhanden sind, können die mehreren $R^1$ gleich oder verschieden voneinander sein; wenn mehrere $X^1$ vorhanden sind, können die mehreren $X^1$ gleich oder verschieden voneinander sein; und p eine ganze Zahl von 0 bis 4 darstellt,

Komponente (B): eine trifunktionelle Verbindung auf Silanbasis, dargestellt durch die folgende allgemeine Formel (b):

$$R^2S1(OR^3)_q(X^2)_{3-q} \qquad (b)$$

wobei,

$R^2$ eine n-Pentadecylgruppe, eine n-Hexadecylgruppe, eine n-Heptadecylgruppe, eine n-Octadecylgruppe, eine n-Nonadecylgruppe, eine n-Eicosylgruppe, eine n-Heneicosylgruppe oder eine n-Docosylgruppe darstellt; $R^3$ eine Methylgruppe darstellt; $X^2$ ein Halogenatom darstellt; wenn mehrere $X^2$ vorhanden sind, die mehreren $X^2$ gleich oder verschieden voneinander sein können; und q eine ganze Zahl von 0 bis 3 darstellt,

Komponente (C): ein Metallkatalysator,

$$\text{Formel (I): } 12 \leq x \leq 64$$

wobei,

x ein Verhältnis einer molaren Menge der Komponente (A) zu einer molaren Menge der Komponente (B) [(A)/(B)] (molares Verhältnis) darstellt, wobei der Metallkatalysator (Komponente (C)) ein Metallkatalysator ist, der keine Lichtbestrahlung benötigt, um eine katalytische Wirkung zu entfalten, und

Schritt (2): ein Schritt des Auftragens der flüssigkeitsabweisenden Zusammensetzung auf ein Substrat oder ein Trennmaterial, gefolgt vom Trocknen, um eine flüssigkeitsabweisende Schicht zu bilden.

**Revendications**

1. Composition repoussant les liquides comprenant les composants (A) à (C) suivants et satisfaisant la formule (I) suivante :

Composant (A) : un composé à base de silane tétrafonctionnel représenté par la formule générale (a) suivante :

$$Si(OR^1)_p(X^1)_{4-p} \qquad (a)$$

dans laquelle,

$R^1$ représente un groupe alkyle ayant 1 à 6 atomes de carbone ; $X^1$ représente un atome d'halogène ; lorsque plusieurs $R^1$ sont présents, les plusieurs $R^1$ peuvent être identiques ou différents les uns des autres ; lorsque plusieurs $X^1$ sont présents, les plusieurs $X^1$ peuvent être identiques ou différents les uns des autres ; et p représente un nombre entier de 0 à 4,

Composant (B) : un composé à base de silane trifonctionnel représenté par la formule générale (b) suivante :

$$R^2Si(OR^3)_q(X^2)_{3-q} \qquad (b)$$

dans laquelle,

R$^2$ représente un groupe n-pentadécyle, un groupe n-hexadécyle, un groupe n-heptadécyle, un groupe n-octadécyle, un groupe n-nonadécyle, un groupe n-eicosyle, un groupe n-hénéicosyle ou un groupe n-docosyle ; R$^3$ représente un groupe méthyle ; X$^2$ représente un atome d'halogène ; lorsque plusieurs X$^2$ sont présents, les plusieurs X$^2$ peuvent être identiques ou différents les uns des autres ; et q représente un nombre entier de 0 à 3,

Composant (C) : un catalyseur métallique,

$$\text{Formule (I)} : 12 \leq x \leq 64$$

dans laquelle,

x représente un rapport d'une quantité molaire du composant (A) à une quantité molaire du composant (B) [(A)/(B)] (rapport molaire), et dans laquelle le catalyseur métallique (Composant (C)) est un catalyseur métallique qui ne nécessite pas d'irradiation lumineuse pour révéler une action catalytique.

2. Composition repoussant les liquides selon la revendication 1, dans laquelle le composant (C) est au moins un composant choisi dans le groupe constitué par un catalyseur à base de titane, un catalyseur à base de zirconium, un catalyseur à base de palladium, un catalyseur à base d'étain, un catalyseur à base d'aluminium et un catalyseur à base de zinc.

3. Composition repoussant les liquides selon la revendication 1 ou 2, dans laquelle la teneur en composant (C) est de 0,010 % en moles ou plus et de 50,000 % en moles ou moins sur la base de 100 % en moles d'une somme totale du composant (A) et du composant (B).

4. Composition repoussant les liquides selon l'une quelconque des revendications 1 à 3, comprenant en outre un catalyseur acide qui est un composant (D), la teneur du composant (D) étant de 0,010 % en moles ou plus et de 1,000 % en moles ou moins sur la base de 100 % en moles d'une somme totale du composant (A) et du composant (B).

5. Composition repoussant les liquides selon la revendication 4, dans laquelle le composant (D) est au moins un composant choisi dans le groupe constitué par l'acide chlorhydrique, l'acide phosphorique, l'acide acétique, l'acide formique, l'acide sulfurique, l'acide méthanesulfonique, l'acide oxalique, l'acide p-toluènesulfonique et l'acide trifluoroacétique.

6. Composition repoussant les liquides selon l'une quelconque des revendications 1 à 5, dans laquelle une teneur totale du composant (A), du composant (B) et du composant (C) dans la composition repoussant les liquides est de 50% en masse ou plus et de 100% en masse ou moins sur la base de 100% en masse de la quantité totale de la composition repoussant les liquides.

7. Composition repoussant les liquides selon l'une quelconque des revendications 1 à 6, satisfaisant en outre à la formule relationnelle (II) suivante :

$$\text{Formule (D)} : x > (2y + 1)$$

dans laquelle, x représente un rapport d'une quantité molaire du composant (A) à une quantité molaire du composant (B) [(A)/(B)] (rapport molaire) ; et y représente un nombre de carbone du groupe alkyle choisi comme R$^2$ dans la formule générale (b) représentant le composant (B).

8. Feuille repoussant les liquides comprenant une couche repoussant les liquides et un substrat ou un matériau de séparation, dans laquelle la couche repoussant les liquides est formée en revêtant la composition repoussant les liquides selon l'une quelconque des revendications 1 à 7 sur le substrat ou le matériau de séparation suivi par un séchage pour former la couche repoussant les liquides.

9. Feuille repoussant les liquides selon la revendication 8, ayant une configuration dans laquelle la couche repoussant les liquides est prise en sandwich entre deux matériaux de séparation.

10. Feuille repoussant les liquides selon la revendication 8 ou 9, comprenant en outre une couche d'adhésif sensible à la pression.

**11.** Procédé de production de la composition repoussant les liquides selon l'une quelconque des revendications 1 à 7, comprenant au moins l'étape (i) suivante :

Etape (i) : une étape de mélange des composants (A) à (C) suivants de manière à satisfaire la formule (I) suivante :

Composant (A) : un composé à base de silane tétrafonctionnel représenté par la formule générale (a) suivante:

$$Si(OR^1)_p(X^1)_{4-p} \qquad (a)$$

dans laquelle,

$R^1$ représente un groupe alkyle ayant 1 à 6 atomes de carbone ; $X^1$ représente un atome d'halogène ; lorsque plusieurs $R^1$ sont présents, les plusieurs $R^1$ peuvent être identiques ou différents les uns des autres ; lorsque plusieurs $X^1$ sont présents, les plusieurs $X^1$ peuvent être identiques ou différents les uns des autres ; et p représente un nombre entier de 0 à 4,

Composant (B) : un composé à base de silane trifonctionnel représenté par la formule générale (b) suivante :

$$R^2Si(OR^3)_q(X^2)_{3-q} \qquad (b)$$

dans laquelle,

$R^2$ représente un groupe n-pentadécyle, un groupe hexadécyle, un groupe n-heptadécyle, un groupe n-octadécyle, un groupe n-nonadécyle, un groupe n-eicosyle, un groupe n-hénéicosyle ou un groupe n-docosyle ; $R^3$ représente un groupe méthyle ; $X^2$ représente un atome d'halogène ; lorsque plusieurs $X^2$ sont présents, les plusieurs $X^2$ peuvent être identiques ou différents les uns des autres ; et q représente un nombre entier de 0 à 3,

Composant (C) : un catalyseur métallique,

$$\text{Formule (I)} : 12 < x < 64$$

dans laquelle,

x représente un rapport d'une quantité molaire du composant (A) à une quantité molaire du composant (B) [(A)/(B)] (rapport molaire), et dans laquelle le catalyseur métallique (Composant (C)) est un catalyseur métallique qui ne nécessite pas d'irradiation lumineuse pour révéler une action catalytique.

**12.** Procédé de fabrication de la feuille repoussant les liquides selon l'une quelconque des revendications 8 à 10, comprenant les étapes (1) et (2) suivantes :

Etape (1) : une étape de préparation d'une composition repoussant les liquides comprenant les composants (A) à (C) suivants et satisfaisant la formule (I) suivante :

Composant (A) : un composé à base de silane tétrafonctionnel représenté par la formule générale (a) suivante :

$$Si(OR^1)_p(X^1)_{4-p} \qquad (a)$$

dans laquelle,

$R^1$ représente un groupe alkyle ayant 1 à 6 atomes de carbone : $X^1$ représente un atome d'halogène ; lorsque plusieurs $R^1$ sont présents, les plusieurs $R^1$ peuvent être identiques ou différents les uns des autres ; lorsque plusieurs $X^1$ sont présents, les plusieurs $X^1$ peuvent être identiques ou différents les uns des autres ; et p représente un nombre entier de 0 à 4,

Composant (B) : un composé à base de silane trifonctionnel représenté par la formule générale (b) suivante :

$$R^2Si(OR^3)_q(X^2)_{3-q} \qquad (b)$$

dans laquelle,

$R^2$ représente un groupe n-pentadécyle, un groupe n-hexadécyle, un groupe n-heptadécyle, un groupe n-octadécyle, un groupe n-nonadécyle, un groupe n-eicosyle, un groupe n-hénéicosyle ou un groupe n-docosyle ; $R^3$ représente un groupe méthyle ; $X^2$ représente un atome d'halogène ; lorsque plusieurs $X^2$ sont présents, les plusieurs $X^2$ peuvent être identiques ou différents les uns des autres ; et q représente un nombre entier de 0 à 3,

Composant (C) : un catalyseur métallique,

$$\text{Formule (I)} : 12 \le x \le 64$$

dans laquelle ,
x représente un rapport d'une quantité molaire du composant (A) à une quantité molaire du composant (B) [(A)/B)] (rapport molaire), dans laquelle le catalyseur métallique (Composant (C)) est un catalyseur métallique qui ne nécessite pas d'irradiation lumineuse pour révéler une action catalytique, et
Etape (2) : une étape de revêtement de la composition repoussant les liquides sur un substrat ou un matériau de séparation, suivie d'un séchage pour former une couche repoussant les liquides.

# Fig. 1

(a)

1a

11
12

(b)

1b

11
12
13
14

# Fig. 2

(a)

2a

14
11
14'

(b)

2b

14
11
13
14'

**EP 3 594 310 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2010285574 A
- WO 2017010517 A